# EUROPEAN PATENT APPLICATION

(11) **EP 4 575 846 A1**
(43) Date of publication of application: **25.06.2025**
(21) Application number: 23219353.2
(22) Date of filing: 21.12.2023
(51) Int. Cl.: G06F 21/14

(54) **METHOD AND DEVICE FOR OBFUSCATING CODE CONTROL FLOW**

(71) Applicant: Nagravision Sàrl, 1033 Cheseaux-sur-Lausanne (CH)
(72) Inventor: PIRET, Eric, 1033 Cheseaux-sur-Lausanne (CH); DUOT, Pierre, 1033 Cheseaux-sur-Lausanne (CH); DORÉ, Laurent, 1033 Cheseaux-sur-Lausanne (CH)
(74) Representative: Mewburn Ellis LLP

(57) **Abstract**

For obfuscating a code control flow a computer-implemented method comprises
- identifying functional blocks in a code to be obfuscated;
- associating a label to each functional block;
- associating at least one event identifier with each functional block;
- creating a prologue function configured to contain a registration for the at least one event identifier of each functional block; and
- creating an epilogue function configured to contain a deregistration for the event identifier of each functional block.

## Description

### FIELD OF THE INVENTION

The present invention pertains to the field of software security. Specifically, it relates to techniques for obfuscating the control flow of computer code, making it more difficult for malicious actors to reverse engineer, analyze, or tamper with software applications.

### BACKGROUND

Software security is a critical concern in today's interconnected world, where the distribution and execution of software applications often occur in untrusted environments. Malicious actors seek to reverse engineer and analyze software code to exploit vulnerabilities, steal sensitive data, or create unauthorized derivative works. To counter these threats, software developers employ various techniques, including code obfuscation.

Code obfuscation is a practice used to obscure the logic and control flow of a software application without altering its functionality. This technique aims to hinder reverse engineering attempts and thwart code analysis. Obfuscation methods typically operate at the binary or source code level and often focus on disguising the control flow of the program.

Traditional code obfuscation techniques, such as renaming variables, restructuring code, or adding redundant instructions, offer some level of protection against reverse engineering. However, they may fall short in addressing increasingly sophisticated attacks. Advanced attackers use techniques like dynamic analysis, control flow analysis, and symbolic execution to reveal the hidden logic and control flow of obfuscated code.

Thus, there exists a need for more effective methods of code obfuscation, specifically those that target the control flow of software applications. By introducing novel control flow obfuscation techniques, it is possible to enhance the security of software against a broader range of reverse engineering and tampering attacks.

### SUMMARY

The present invention discloses a method for obfuscating the control flow of computer code.

While the invention is defined in the independent claims, further aspects of the invention are set forth in the dependent claims, the drawings and the following description.

The method detailed in this patent application provides a comprehensive approach to control flow obfuscation, enhancing the security of software applications in a wide range of domains, including but not limited to cybersecurity, intellectual property protection, and software licensing.

### BRIEF DESCRIPTION OF THE FIGURES

Fig. 1 shows an example of a transformation of a conventional flowchart of a code control flow into an obfuscated flowchart of a code control flow;
Fig. 2 shows an embodiment of a transformation of a conventional flowchart of a code control flow into an obfuscated flowchart according to the invention;
Fig. 3 shows an embodiment of protecting an obfuscated flowchart; and
Fig. 4 shows an obfuscated flowchart during runtime.

### DESCRIPTION OF THE PREFERRED EMBODIMENTS

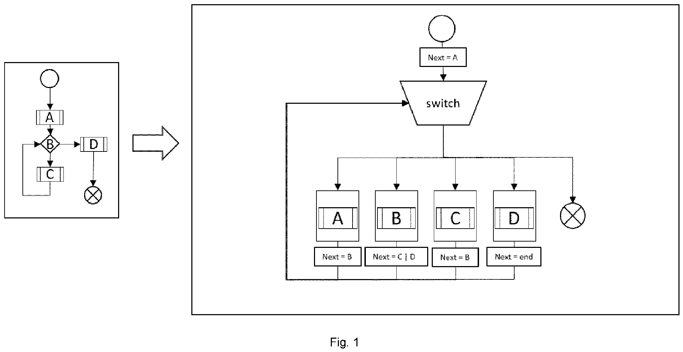

Fig. 1 shows an exemplary transformation of a flowchart into a flowchart of obfuscated code. Before explaining the an obfuscation in detail, some general aspects of the invention will be discussed.

According to an aspect, a computer-implemented method for obfuscating code control flow comprises
- identifying functional blocks in a code to be obfuscated;
- associating a label to each functional block;
- associating at least one event identifier with each functional block;
- creating a prologue function configured to contain a registration for the at least one event identifier of each functional block; and
- creating an epilogue function configured to contain a deregistration for the event identifier of each functional block. As the functional blocks do not directly indicate the next functional block for execution, a static analysis requires access to the prologue function to link a functional block to its predecessor and thus comprehend the structure of the obfuscated code control flow. The prologue function however can be kept separate from the functional blocks and only be accessed when an event identifier is triggered.

In various embodiments the label is a random name unrelated to a function of the functional block.

In various embodiments identifying functional blocks comprises
- creating an abstract syntax tree of the code to be obfuscated;
- identifying individual statements in the abstract syntax tree;
- for each statement in the abstract syntax tree, identifying all predecessor statements and all successor statements;
- identifying statements that have a single predecessor statement and a single successor statement;
- identifying statements that have a single predecessor statement or a single successor statement;
- identifying statements that have no or at least two predecessor statements;
- identifying statements that have no or at least two successor statements; and
- for the identified statements identifying groups of successive statements such that every statement has a single successor statement in the group and/or is a last statement of the successive statements in the group, and every statement has a single predecessor statement in the group and/or is the first statement in the group;
wherein the succession of statements is identified as one functional block. With respect to these embodiments, an abstract syntax tree is a representation of the abstract syntactic structure of text provided in a programming language. The functional blocks thus essentially consist of a chain of statements, where a first statement either has no predecessor, at least two predecessors or is a first statement because its preceding statement is a last statement in a preceding functional block. A last statement has no successor, at least two successors or is a last statement because its succeeding statement is a first statement in a succeeding block.

In various embodiments the code is provided in a programming language that uses imperative programming and supports event-driven programming. This allows replacing connections between functional units by events.

In various embodiments the registration of the prologue function comprises for each functional block at least one respective event identifier triggering that functional block.

In various embodiments the deregistration comprises removing an event identifier from the registration of the prologue function. This prevents keeping the relationships between the functional blocks and their triggering events decentralized.

In various embodiments the method further comprises identifying a statement triggered by a call event, and identifying a block containing the statement triggered by the call event as a start block.

In various embodiments the method further comprises identifying a statement triggering a program return as an end block.

In various embodiments at least one event identifier is expressed as an event value, the event value being a function of a value generated only during a runtime of the obfuscated code. As the event identifier is a function of the value only present at runtime, static analysis of the computer program is rendered more difficult.

According to a further aspect a computer-implemented method for running an obfuscated code control flow comprises
- calling a prologue function of an obfuscated code by registering at least two functional blocks and for each functional block at least one event identifier triggering the respective functional block;
- calling a start block of the obfuscated code;
- executing a respective functional block and generating a respective event identifier by finishing executing the respective functional block;
- calling a next functional block as a function of the respective event identifier;
- calling an end block and returning a result of the obfuscated code;
- deregistering all functional blocks by removing at least one event identifier from the registration of the prologue function.

In various embodiments the respective event identifier is determined by computation of an opaque predicate, the opaque predicate generating an event value through an expression including a value generated while running the obfuscated code.

According to a further aspect a data processing apparatus comprises means for carrying out the method of any previous embodiment.

According to a further aspect a computer program product comprises instructions which, when the program is executed by a computer, cause the computer to carry out the method of any previous embodiment.

Within the context of this application, a computer program is a set of instructions for a computer to execute on request. In various embodiments the computer program is prepared in a text based or visual programming language. In various embodiments, each computer program has several modules, some of the modules having several functions and code obfuscation is applied to at least some modules separately. In various embodiments, the functional blocks of the modules are grouped at random with functional blocks of other modules. In object oriented programming languages the term "method" is used instead of "function".

In various embodiments, a microprocessor is configured to run a computer program and/or an obfuscated code according to the invention.

Coming back to Fig. 1, an exemplary flowchart of a computer program comprises a plurality of elements comprising a plurality of functional blocks A, B, C, D, a decision element 10 and terminals Start, End. Arrows indicate an order of operation between adjacent elements. The functional blocks A, B, C, D indicate at least one operation that changes at least one value, location or form of data, or that provides an input and/or output. In further embodiments additional or other elements are present. The decision element 10 indicates a conditional operation that directs the program flow to either functional block B or functional block C. For example, the decision element is a yes/no, true/false, equality or inequality test. Typical tests include whether a value is reached, is larger than a reference value or is even or odd. In further embodiments more than two results are provided, such that the program flow has several possible prongs from which one is followed. In further embodiments the decision element comprises a prong directing the program flow to a functional block that has been processed previously, thus guiding the program flow in a loop.

The terminal Start indicates a beginning of the computer program. The terminal Start is invoked by a system to execute the computer program. In various embodiments the terminal Start also represents an interface allowing submission of one or more input values, input data and/or input data structures. In various embodiments the system is another computer program, an operating system and/or a manual operation or input.

The terminal End indicates an ending of the computer program. The terminal End terminates executing the computer program and returns to the system or to another computer program. In various embodiments, the terminal End returns a value, output data and/or an output data structure.

In order to obfuscate the computer program, the code can be flattened to thus form a flattened program. In various embodiments code flattening is limited to one function. In various embodiments, every operation is provided with an operation label. In various embodiments for every operation a label of a following operation is noted. In various embodiments a switch case operation is added, the switch case operation being configured to direct the program flow to a following operation. In various embodiments the switch case operation is configured to receive an operation label of a following operation and to direct the program flow to the operation so labelled.

In various embodiments an operation comprises a decision and an operation label of a following operation is indicated as a result of the decision. In various embodiments the flattened program comprises terminals Start, End indicating a beginning and an ending of the flattened program, respectively. In various embodiments the terminal Start represents an interface allowing submission of input to the flattened program. In various embodiments, the terminal Start causes the Switch case operation to direct the program flow to a first operation of the flattened program. In various embodiments, the terminal Start provides a label of the first operation to the Switch case operation for the Switch case operation to direct the program flow to the first operation.

In various embodiments, a last operation provides a label "End" to the Switch case operation, and the Switch case operation directs the program flow to the terminal End. The terminal End terminates executing the computer program and returns to the system or to another computer program. In various embodiments, the terminal End returns a value, output data and/or an output data structure. The flattened program thus can be called in the same manner as the computer program without flattening and the flattened program is configured to return to the system or to another computer program in the same manner as the computer program without flattening. The flattened program thus is compatible with the system or other computer program in the same manner as the computer program without flattening.

For the exemplary computer program recited above, the code flattening thus generates a flattened program as depicted in the flow chart of Fig. 1 on the right hand side. In this embodiment, the flattened program comprises functional blocks A, B, C, D corresponding to functional blocks A, B, C, D of the original computer program. The functional blocks A, B, C, D are further associated with an indication as to which functional block A, B, C, D is to follow respectively after each functional block A, B, C, D. The flattened program of the embodiment further comprises a Switch case operation configured to receive a label of a functional block for the Switch case operation to direct the program flow to.

In the depicted embodiment, the functional block A comprises additionally a mapping of the decision 10 and thus is configured to also decide whether the program flow is to be directed to the functional block B or to the functional block C. Each of the functional blocks B and Care configured to have the Switch case operation direct the program flow to the functional block D.

The flattened program further comprises terminals Start, End corresponding to the terminals Start, End of the original computer program. The terminal Start of the flattened program particularly contains a reference with the label A for the Switch case operation to direct the program flow to the functional block A. The functional block D is particularly associated with a reference to the terminal End for the Switch case operation to direct the program flow to the terminal End, to thus end the flattened program and to return to the system or to another computer program.

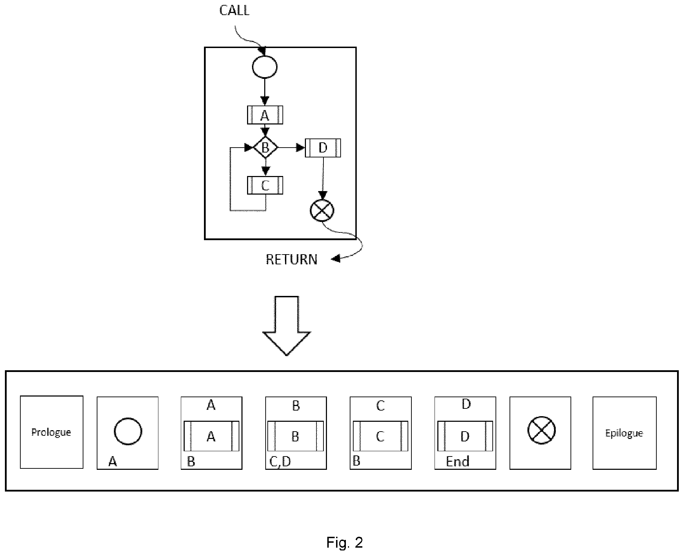

Fig 2 shows a further embodiment of a transformation of a conventional flowchart of a code control flow of a computer program into an obfuscated code. The computer program in various embodiments is a function, a routine, subprogram, subroutine, or procedure, which terms are sometimes used interchangeably. For reference, the initial unobfuscated flowchart comprises a connector CALL, functional blocks A, B, C, D and a connector RETURN. The functional blocks A, C, D represent processes, each comprising a set of operations that changes a value, a form, and/or a location of data. In the depicted example, the functional block B comprises a decision element processing a conditional operation that directs the program flow to either the functional block C or to the functional block D. An output of the functional block C is looped back to the decision element B. An output of the functional block D passes to the connector RETURN to thus end the computer program and to return to a system or to another computer program which called the computer program. While the computer program is depicted as a flowchart corresponding to depictions in a visual programming language, the computer program can also be written and represented as a text based computer program. In various embodiments the computer program is written in a language that uses an imperative programming style, and/or that supports an event-driven programming style. In various embodiments, the computer program is written in JavaScript.

Functional blocks are identified in particular using a parser. The parser creates an abstract syntax tree of the programming language used to prepare the computer code. Examples for JavaScript are acornJS or babelJS. On the abstract syntax tree individual statements are identified. For each statement, all predecessor statements and all successor statements are identified. For example, an addition has one successor which is the next statement, but a conditional statement such as an 'if-then-else' statement has two successors, chosen based on the conditional expression. A functional block then is a succession of statements where any two adjacent statements are the only predecessor and only successor, respectively, of each other. Thus, any statement that has more than one predecessor (or non in the case of the first statement) marks the start of a block, any statement that has more than one successor (or non in the case of the return statement) marks the end of a block. The first and the last statements on the abstract syntax tree have no predecessor and successor, respectively.

For the present embodiment of the transformation, each functional block receives a label. In Fig. 2 the labels A, B, C, D are used. In various embodiments the labels are random names without implications regarding a function or order of the functional block receiving the label. As the labels are random, an attacker cannot easily identify a pattern in naming, which could help in reconstructing the original code. In further embodiments, new versions of the obfuscated code apply different random names to the functional blocks, such that reuse of previous attacks becomes harder. In various embodiments, random names are different for every new installation of the obfuscated code, such that previous attacks cannot be applied immediately. In various embodiments, a pseudo-random algorithm with some specific properties is used to watermark obfuscated code to a given user.

Each functional block is additionally associated with an event identifier. Each event identifier is an indication as to which functional block is to be processed next. In various embodiments, the functional blocks are scattered throughout the code so that their interrelation is not immediately conceivable from the order in which they are present in the obfuscated code. The labels are unique for the respective functional block.

For the obfuscated code a prologue function Prologue is created. The prologue function Prologue is configured to register the associations of the labels of the functional blocks A, B, C, D and their respective event identifier. In the presently depicted example the event identifiers are the same as the labels of the functional blocks A, B, C, D. In various embodiments the prologue function Prologue contains a table where each row contains an entry of one functional block and an event identifier associated with this functional block. In various embodiments a functional block is associated with more than one event identifier. In various embodiments the prologue function Prologue is configured to be created separately from the functional blocks A, B, C, D being called for the first time. In various embodiments the prologue function Prologue is created for more than one subroutine each having a separate connector CALL, respectively, so as not to be able to associate a set of functional blocks with a particular subroutine.

In various embodiments, an instance of EventEmitter of JavaScript is used. Particularly, EventEmitter is a design pattern that allows objects to emit named events and to subscribe to these events with callback functions. In various embodiments the functional blocks use EventEmitter to emit events using the emit method. The event is then identified by a string (event name).

The functional blocks A, B, C, D are configured to process their function and upon completion provide an event identifier. In various embodiments, the event identifier is a function of the process of the respective functional block A, B, C, D. In various embodiments, the event identifier is generated during processing of the respective functional block A, B, C, D. In various embodiments the event identifier is a result of a calculation and/or algorithm processed by the respective functional block. The provided event identifier is passed to the prologue function to determine a following functional block A, B, C, D.

In the depicted example of Fig. 2, the functional block A provides an event identifier for B, such that the functional block B becomes the next functional block. The functional Block B is configured to generate an event identifier for the functional locks C or D. Depending on the process of the functional block B, the an event identifier for the functional block C or for the functional block D is generated. Consequently, the prologue will pass the process flow either the functional block C or to the functional block D. In brief, the functional block C will generate an event identifier for the process flow to loop back to the functional block B.

In various embodiments, the connector CALL and the connector RETURN are configured to allow the computer program being started once or several times and from several places during one execution of another program, including from other functions, and being branched back after the computer program being executed. In the depicted obfuscated code, the connector CALL is configured to generate the event identifier for the functional block A, such that the prologue selects the functional block A as the next functional block. The functional block D is configured to generate the event identifier for the connector RETURN such that the prologue selects the connector RETURN. The connector RETURN is configured to branch back the control flow to the other program.

In various embodiments of the obfuscated code, an epilogue function Epilogue is created. The epilogue function is configured to deregister entries in the prologue function. In various embodiments, the epilogue function Epilogue is configured to deregister all entries in the prologue function. In various embodiments, the epilogue function is configured to deregister the prologue function every time a control flow passes the connector RETURN to thus end the computer program and to return to a system or to another computer program. In various embodiments, the epilogue function is configured to deregister the prologue function when the microprocessor is turned into a stand-by mode or is powered off.

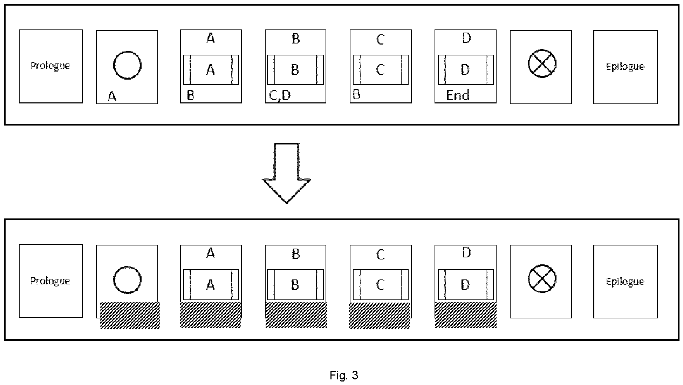

Fig. 3 shows an embodiment of an additional obfuscation of the embodiment of a transformation of a conventional flowchart of a code control flow of a computer program into an obfuscated code of Fig. 2. The prologue function Prologue, the epilogue function Epilogue, and the connector RETURN are the same as described by reference to Fig. 2. The event identifiers are generated in a manner providing opacity protection. The opacity protection hides the event identifier generation from static analysis. Generally, an event identifier comprises or is generated from a predicate. An opacity protection comprises hiding the predicate behind a runtime expression. For example, instead of explicitly indicating an event identifier in a programming code of a functional block, the event identifier is provided in a manner comprising a result of a calculation or an algorithm as a predicate. A trivial example of hiding the predicate `42' would be to replace it with '40 + 2'. However, more complex computations of predicates allowing to better hide constants are conceivable, such as using asynchronous computations, using mixed boolean arithmetic to hide operations, using server-side operations, cryptographic functions, etc. In various embodiments suspicious requests to generate predicates are provided with parameters causing incorrect execution of the obfuscated code for example leading to an incorrect result, a delay and/or an infinite loop.

In various embodiments the event identifier is generated by the respective functional block only on the basis of parameters provided in the same functional block. In various embodiments an event identifier is generated on the basis of parameters provided by instances outside of the obfuscated code. In that case, the respective functional block is configured to account for such change of the parameter while providing the same event identifier.

In various embodiments, an event may occur while the obfuscated code is executed. If the event is generated by the obfuscated code itself, in various embodiments the event is caught by the obfuscation and managed at a next wait present on a control flow path. If the event is external to the obfuscated code, the obfuscated code is not concerned if the obfuscated code only has a local context. If the event is external and the obfuscated code only uses read-only global context, no problem will occur if the read-only global context is copied when the connector CALL is processed. In various embodiments, an event identifier is only generated on the basis of context from the functional block generating the event identifier and/or from read-only global context and the read-only global context is copied to a memory for the obfuscated code when the connector CALL is processed. If the event is external and the obfuscated code uses a read/write global context, the respective functional block is configured to account for such change of the context, and only provides a defined event identifier.

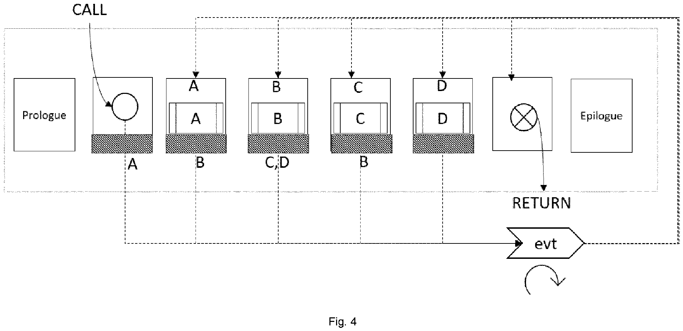

Fig. 4 shows the obfuscated code of the embodiment of Fig. 3 at runtime. Particularly, the obfuscated code is started at the connector CALL. Before or when the obfuscated code is started, the prologue function Prologue registers the associations of the labels of the functional blocks A, B, C, D and their respective event identifiers. The connector CALL generates a specific event identifier. The prologue function Prologue matches the event identifier from the connector CALL to a functional block A, B, C, D. The event identifier of the connector CALL presently relates to the functional block A. An event manager evt is configured to pass the control flow to the functional block matching the respective event identifier. The event manager evt passes the control flow to the functional block A. In various embodiments, the event manager can listen for events using the so-called 'on method'. When a functional block provides the event identifier, a callback function will be executed. In various embodiments the prologue function Prologue lists callback functions for all event identifiers.

The functional block A operates and generates a next event identifier. The prologue function Prologue matches the next event identifier to the functional block B. The event manager evt passes the control flow to the functional block B.

The functional block B operates and provides a decision. The decision leads to generating either an event identifier matching the functional block C or an event identifier matching the functional block D. The event manager evt passes the control flow to the respective functional block C or D. If the event manager evt passes the control flow to the functional block C, the functional block C operates and generates a next event identifier. The prologue function Prologue matches the next event identifier to the functional block B. The event manager evt passes the control flow to the functional block B.

If the event manager evt passes the control flow to the functional block D, the functional block D operates and generates a next event identifier. The prologue function Prologue matches the next event identifier to the connector RETURN. The event manager evt passes the control flow to the connector RETURN. The connector RETURN branches back the control flow to the other program after the obfuscated code has been executed. In various embodiments, the connector RETURN returns any results to the other program or system.

In various embodiments, the epilogue function Epilogue deregisters entries in the prologue function Prologue. In various embodiments, the epilogue function Epilogue deregisters all entries in the prologue function Prologue. In various embodiments, the epilogue function Epilogue deregisters the prologue function Prologue every time a control flow passes the connector RETURN to thus end the obfuscated code and to return to a system or to another computer program. In various embodiments, the epilogue function Epilogue deregisters the prologue function Prologue when the microprocessor is turned into a stand-by mode or is powered off. In various embodiments, the event identifiers are removed from the EventEmitter instance.

## Claims

1. A computer-implemented method for obfuscating code control flow, the method comprising
- identifying functional blocks in a code to be obfuscated;
- associating a label to each functional block;
- associating at least one event identifier with each functional block;
- creating a prologue function configured to contain a registration for the at least one event identifier of each functional block; and
- creating an epilogue function configured to contain a deregistration for the event identifier of each functional block.

2. The method of claim 1, wherein the label is a random name unrelated to a function of the functional block.

3. The method of claims 1 or 2, wherein identifying functional blocks comprises
- creating an abstract syntax tree of the code to be obfuscated;
- identifying individual statements in the abstract syntax tree;
- for each statement in the abstract syntax tree, identifying all predecessor statements and all successor statements;
- identifying statements that have a single predecessor statement and a single successor statement;
- identifying statements that have a single predecessor statement or a single successor statement;
- identifying statements that have no or at least two predecessor statements;
- identifying statements that have no or at least two successor statements; and
- for the identified statements identifying groups of successive statements such that every statement has a single successor statement in the group and/or is a last statement of the successive statements in the group, and every statement has a single predecessor statement in the group and/or is the first statement in the group;
wherein the succession of statements is identified as one functional block.

4. The method of any preceding claim, wherein the code is provided in a programming language that uses imperative programming and supports event-driven programming.

5. The method of any preceding claim, wherein the registration of the prologue function comprises for each functional block at least one respective event identifier triggering that functional block.

6. The method of any preceding claim, wherein the deregistration comprises removing an event identifier from the registration of the prologue function.

7. The method of any preceding claim, further comprising identifying a statement triggered by a call event, and identifying a block containing the statement triggered by the call event as a start block.

8. The method of any preceding claim, further comprising identifying a statement triggering a program return as an end block.

9. The method of any preceding claim, wherein at least one event identifier is expressed as an event value, the event value being a function of a value generated only during a runtime of the obfuscated code.

10. A computer-implemented method for running an obfuscated code control flow, the method comprising
- calling a prologue function of an obfuscated code by registering at least two functional blocks and for each functional block at least one event identifier triggering the respective functional block;
- calling a start block of the obfuscated code;
- executing a respective functional block and generating a respective event identifier by finishing executing the respective functional block;
- calling a next functional block as a function of the respective event identifier;
- calling an end block and returning a result of the obfuscated code;
- deregistering all functional blocks by removing at least one event identifier from the registration of the prologue function.

11. The method of claim 10, wherein the respective event identifier is determined by computation of an opaque predicate, the opaque predicate generating an event value through an expression including a value generated while running the obfuscated code.

12. A data processing apparatus comprising means for carrying out the method of any of claims 1-11.

13. A computer program product comprising instructions which, when the program is executed by a computer, cause the computer to carry out the method of any of claims 1-11.
